# FASCICULE DE BREVET EUROPEEN

(11) **EP 4 260 549 B1**
(45) Date de publication et mention de la délivrance du brevet: **29.04.2026**
(21) Numéro de dépôt: 21820671.2
(22) Date de dépôt: 16.11.2021
(51) Int. Cl.: G06T 5/50, H04N 23/56, H04N 23/68

(54) **PROCÉDÉ D'ACQUISITION ET D'ANALYSE D'UNE SCÈNE PAR DIFFÉRENCE D'IMAGES**
VERFAHREN ZUR ERFASSUNG UND ANALYSE EINER SZENE DURCH BILDUNTERSCHIED
METHOD FOR ACQUIRING AND ANALYSING A SCENE BY IMAGE DIFFERENCE

(30) Priorité: 10.12.2020 FR 2012967
(43) Date de publication de la demande: 18.10.2023
(73) Titulaire: Centre National d'Études Spatiales, 75039 Paris Cedex 01 (FR)
(72) Inventeur: BOURCIER, Frédéric, 31450 POMPERTUZAT (FR); INFANTE, Fulvio, 31320 AUREVILLE (FR); THIN, Guillaume, 31450 BELBERAUD (FR)
(74) Mandataire: Germain Maureau
(86) Numéro de dépôt international: PCT/FR2021/052023
(87) Numéro de publication internationale: WO 2022/123133

(56) Documents cités:
- EP-A1- 1 662 806
- WO-A1-97/33435
- US-A1- 2014 036 106
- US-A1- 2016 232 672
- US-A1- 2016 246 045
- US-A1- 2019 166 355
- US-A1- 2020 267 299
- US-B2- 7 583 297

## Description

La présente invention concerne le domaine de l'acquisition synchronisée d'images actives, et en particulier une méthode de traitement et d'analyse d'images différentielles.

Il est connu d'éclairer une scène avec une source de lumière et d'acquérir simultanément une image de ladite scène ainsi éclairée. L'éclairage de la scène peut être celui d'une lumière ambiante, et/ou celui d'une lumière d'excitation, choisie dans une bande de fréquence déterminée, ultraviolet par exemple, pour déclencher au niveau de la scène une émission de lumière particulière, par exemple par un effet de fluorescence ou de phosphorescence. L'émission de la lumière d'excitation, sous la forme d'un flash par exemple, est synchronisée avec le déclenchement d'une période d'acquisition de la lumière particulière, d'origine fluorescente ou phosphorescente par exemple, de sorte que la période d'acquisition peut être aussi réduite que possible, en proportion de l'intensité du flash d'excitation. Cela permet de réduire très significativement l'exposition du capteur à la luminosité ambiante, à l'origine d'un bruit lumineux se superposant avec le signal fluorescent ou phosphorescent utile.

Pour réduire encore plus le bruit lié à la luminosité ambiante, il est également connu d'acquérir successivement une première image de la scène éclairée seulement par la lumière ambiante, et une deuxième image de la scène éclairée par la lumière ambiante et par la lumière du flash d'excitation : la première image est ainsi formée par la lumière ambiante réfléchie par la scène, la deuxième image étant formée par la lumière ambiante réfléchie par la scène à laquelle s'ajoute signal fluorescent ou phosphorescent utile produit par le flash d'excitation, de sorte que par une soustraction de la première image à la deuxième image, le signal utile peut-être extrait du bruit lumineux ambiant.

Divers facteurs peuvent néanmoins réduire l'efficacité du procédé connu décrit ci-avant. En particulier, un déplacement relatif, même faible, de la scène relativement au capteur d'acquisition, ou du capteur d'acquisition relativement à la scène, va introduire des artéfacts au niveau de la différence des images qui peuvent nuire à la qualité de l'extraction du signal utile.

Ainsi, il est possible d'obtenir, par des traitements particuliers des images successivement acquises selon le procédé connu décrit ci-avant, une amélioration de la qualité du signal utile obtenu par différence de ces images. Il est également possible d'optimiser l'efficacité des traitements particuliers considérés. La demande de brevets US 2019/166355 A1 divulgue un dispositif d'imagerie qui réduit l'impact négatif de la lumière ambiante sur une image acquise avec une illumination active.

La demande de brevets US 2020/267299 A1 divulgue un dispositif d'imagerie qui améliore les régions de l'avant-plan qui sont sur-exposées par un flash, et les régions sous-exposées à l'arrière-plan.

L'invention a donc pour but de proposer une solution à tout ou partie de ces problèmes.

A cet effet, la présente invention concerne un procédé d'acquisition et d'analyse d'une scène par différence d'images acquises avec un capteur d'images, tel que décrit à la revendication 1 ci-après.

Selon la revendication 1, l'image différentielle est une différence entre la première image, et la deuxième image recalée.

Selon ces dispositions, l'impact, sur le signal utile de l'image différentielle, d'un bouger entre l'acquisition de la première image et l'acquisition de la deuxième image sera limité.

Selon un mode de mise en œuvre, l'invention comprend une ou plusieurs des caractéristiques suivantes, seules ou en combinaison techniquement acceptable.

Selon un mode de mise en œuvre la source d'excitation est une source complémentaire de lumière, ou une source d'excitation sonore, ou une source d'excitation électrique.

Selon un mode de mise en œuvre, la source complémentaire de lumière dispose d'un ou plusieurs éléments filtrants ou polarisants.

Selon un mode de mise en œuvre, la source complémentaire de lumière est configurée pour émettre dans une ou plusieurs longueurs d'onde différentes, par exemple à une longueur d'onde de l'ultraviolet, de l'infrarouge, ou du visible.

Selon un mode de mise en œuvre, au moins une itération des étapes du procédé est réalisée de manière à obtenir au moins une autre image différentielle et dans lequel l'au moins une autre image différentielle est recalée par rapport à l'image différentielle avant de calculer une image différentielle intégrée en fonction de l'image différentielle et de l'au moins une autre image différentielle recalée, puis de remplacer l'image différentielle par l'image différentielle intégrée.

Selon l'invention, l'étape d'acquisition d'une première image est répétée au moins deux fois, et l'étape d'acquisition d'une deuxième image est répétée au moins deux fois, le procédé comprenant en outre :
- une étape de premier recalage des au moins deux premières images, l'étape de premier recalage étant suivie d'une étape d'intégration des au moins deux premières images recalées, de manière à produire une première image intégrée
- une étape de deuxième recalage des au moins deux deuxièmes images, l'étape de deuxième recalage étant suivie d'une étape d'intégration des au moins deux deuxièmes images recalées, de manière à produire une deuxième image intégrée
- dans lequel l'étape de calcul d'une deuxième image recalée et l'étape de calcul d'une image différentielle sont appliquées à la deuxième image intégrée et à la première image intégrée pour respectivement calculer une deuxième image intégrée recalée par rapport à la première image intégrée, puis l'image différentielle égale à une différence entre la première image intégrée, et la deuxième image intégrée recalée.

Selon un mode de mise en œuvre, l'intégration respectivement d'au moins deux images différentielles, ou d'au moins deux premières images, ou d'au moins deux deuxièmes images, comprend le calcul d'une somme ou d'une moyenne respectivement des au moins deux images différentielles, ou des aux moins deux premières images, ou des au moins deux deuxièmes images.

Selon ces dispositions, le bruit est réduit.

Selon un mode de mise en œuvre, la première image est une première matrice de pixels, la deuxième image est une deuxième matrice de pixels, et le calcul d'une deuxième image recalée comprenant la détermination d'un décalage entre la première matrice et la deuxième matrice, ledit décalage faisant correspondre à un pixel de la première matrice, un pixel correspondant de la deuxième matrice, la détermination du décalage comprenant les sous-étapes suivantes:
- calcul d'une somme, pour une pluralité de pixels de la première matrice, d'une valeur absolue d'une différence entre la valeur du pixel de la première matrice et la valeur du pixel correspondant de la deuxième image, pour au moins deux décalages;
- détermination que le décalage est, parmi les au moins deux décalages, celui pour lequel la somme calculée répond à un critère prédéterminé.

Selon un mode de mise en œuvre, le critère prédéterminé est un critère de minimisation de la somme calculée, autrement dit le décalage déterminé est celui pour lequel la somme calculée est minimum parmi les au moins deux décalages.

Selon un mode de mise en œuvre, la pluralité de pixels de la première matrice est une ligne de pixels de la première matrice et une colonne de pixels de la première matrice.

Selon ces dispositions, l'étape de recalage est particulièrement adaptée à la spécificité de l'imagerie différentielle, pour améliorer les performances et la vitesse du recalage.

Selon un mode de mise en œuvre, le capteur comprend une matrice de détecteurs, et une matrice de filtres colorés superposée à la matrice de détecteurs, le capteur étant configuré pour que la première image et la deuxième image soient brutes, autrement dit non dématricées, et dans lequel la première image et la deuxième image ne sont pas dématricées avant l'étape de calcul de l'image différentielle.

Selon ces dispositions, la quantité de données à traiter dans chaque image est réduite d'environ deux tiers, par rapport au volume de données qui seraient à traiter si le ou les traitements était réalisés sur des images dématricées.

Selon un mode de mise en œuvre, le procédé comprend en outre une étape de débruitage appliquée à l'image différentielle pour obtenir une image différentielle débruitée.

Selon un mode de mise en œuvre, l'étape de débruitage comprend une sous-étape, appliquée aux pixels d'une matrice de pixels de l'image différentielle, de détermination qu'un pixel est bon ou mauvais, un pixel étant déterminé mauvais sur la base d'une comparaison de la valeur dudit pixel à la valeur de pixels voisins dudit pixel dans la matrice, et un pixel étant déterminé bon s'il n'est pas déterminé mauvais, et une sous-étape de remplacement de la valeur dudit pixel par une valeur nulle ou par une valeur fonction de la valeur des pixels voisins, déterminés bon, dudit pixel, lorsque ledit pixel est déterminé mauvais.

Selon un mode de mise en œuvre, la comparaison de la valeur du pixel à la valeur de pixels voisins calcule un score de ressemblance du pixel à la valeur des pixels voisins, et le pixel est déterminé mauvais en fonction d'un critère appliqué au score de ressemblance calculé. Par exemple, un pixel présentant une faible ressemblance en valeur à ses voisins est déterminé mauvais ; de même un pixel présentant une forte ressemblance avec un nombre trop limité de voisins est déterminé mauvais.

Selon ces dispositions, le signal utile étant faible et le bruit étant élevé en comparaison dudit signal utile, les valeurs bruitées ne seront pas moyennées, donc pas étalées par l'étape de débruitage.

Selon un mode de mise en œuvre, une étape de dématriceage n'est pas réalisée avant l'étape de débruitage, de manière à réduire le volume des données à traiter.

Selon un mode de mise en œuvre, le procédé comprend en outre une étape de compression appliquée à l'image différentielle débruitée, pour obtenir une image différentielle débruitée comprimée dans laquelle chaque pixel de la matrice de pixels de l'image différentielle débruitée comprimée est codée sur un nombre de bits inférieur ou égal à un nombre de bits déterminé, de préférence inférieur ou égal à 8 bits.

Selon un mode de mise en œuvre, une étape de dématriceage n'est pas réalisée avant l'étape de compression, de manière à réduire le volume des données à traiter.

Selon un mode de mise en œuvre, le procédé comprend en outre une étape d'affichage de l'image différentielle débruitée comprimée.

Selon un mode de mise en œuvre, l'affichage de l'image différentielle débruitée comprimée comprend l'utilisation d'un code couleur pour améliorer la visibilité des zones comprenant un signal utile, le signal utile étant déterminé après un tri des pixels selon leur caractéristiques d'intensité et de couleur, par exemple de manière à sélectionner les pixels fluorescents ou phosphorescents.

Selon un mode de mise en œuvre, l'image différentielle débruitée comprimée est affichée en superposition à une image contextuelle, l'image contextuelle résultant d'un traitement de la première image ou de la deuxième image, pour faire apparaître une information sur l'entourage des zones comprenant un signal utile, par exemple de fluorescence ou phosphorescence.

Selon un mode de mise en œuvre, le procédé comprend en outre une étape d'éclairage de la scène ou d'un environnement de la scène par une source d'éclairage s'ajoutant à la lumière ambiante, l'étape d'éclairage étant synchronisée de sorte que ledit éclairage soit éteint pendant que les étapes d'acquisition par le capteur d'une première image de la scène, d'excitation de la scène par la source d'excitation, et d'acquisition par le capteur d'une deuxième image de la scène sont mises en œuvre.

Selon ces dispositions, l'éclairage de la scène permet à l'opérateur du procédé de travailler dans des conditions de luminosité satisfaisantes sans ajouter de bruit ambiant pendant les étapes d'acquisition des premières et deuxièmes images.

Selon un aspect de l'invention, elle concerne également un programme d'ordinateur, comprenant un ensemble d'instructions configurées pour implémenter le procédé selon l'un des modes de réalisation décrit ci-avant, lorsque lesdites instructions sont exécutées par un ordinateur.

Selon un autre aspect de l'invention, elle concerne également un support lisible par un ordinateur, comprenant un ensemble d'instructions configurées pour implémenter le procédé selon l'un des modes de réalisation décrit ci-avant, lorsque lesdites instructions sont exécutées par un ordinateur.

Pour sa bonne compréhension, un mode de réalisation et/ou de mise en oeuvre de l'invention est décrit en référence aux dessins ci-annexés représentant, à titre d'exemple non limitatif, une forme de réalisation ou de mise en œuvre respectivement d'un dispositif et/ou d'un procédé selon l'invention. Les mêmes références sur les dessins désignent des éléments similaires ou des éléments dont les fonctions sont similaires.
[Fig. 1] est une vue schématique d'un dispositif d'acquisition d'une ou plusieurs paires d'images successives ;
[Fig. 2] est une présentation schématique du séquencement des étapes d'un mode de mise en œuvre du procédé selon l'invention ;
[Fig. 3a] illustre un mode de mise en œuvre d'une étape de calcul d'une deuxième image recalée ;
[Fig. 3b] illustre un mode de mise en œuvre d'une étape de calcul d'une deuxième image recalée;
[Fig. 3c] illustre un mode de mise en œuvre d'une étape de calcul d'une deuxième image recalée;
[Fig. 3d] illustre un mode de mise en œuvre d'une étape de calcul d'une deuxième image recalée;
[Fig. 3e] illustre un mode de mise en œuvre d'une étape de calcul d'une deuxième image recalée;

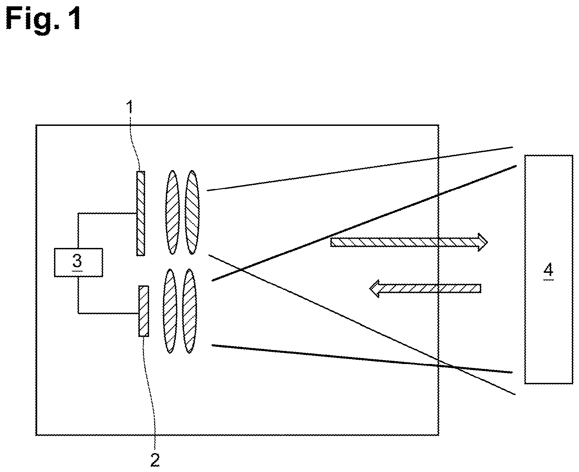

L'invention concerne un procédé 100 d'acquisition et d'analyse d'une scène 4 par différence d'images acquises avec un capteur 2 d'images, par exemple une matrice de détecteurs. La scène 4 et le capteur 2 sont représentés de manière schématique sur la figure 1, ainsi qu'une source complémentaire 1 de lumière. Dans un premier temps, la scène 4 est éclairée par la lumière ambiante qui est réfléchie et/ou diffusée par la scène avant de contribuer à la formation d'une première image de la scène, acquise par le capteur 2. Dans un deuxième temps, la scène est excitée par une source d'excitation 1, par exemple une source complémentaire 1 d'une lumière choisie pour exciter optiquement certains composants de la scène 4, ou dans une zone d'intérêt de la scène 4, de manière à déclencher ainsi, pendant une période de temps, une émission lumineuse, par exemple par un effet de fluorescence, ou de phosphorescence, ou par un effet Raman, qui va contribuer, en plus de la lumière ambiante réfléchie ou diffusée par la scène 4, à la formation d'une deuxième image acquise par le capteur 2.

L'acquisition 103 de la deuxième image est synchronisée avec l'excitation 102 de la scène de sorte que l'acquisition 103 de la deuxième image soit réalisée pendant une partie de la période de temps de l'émission.

La source complémentaire 1 de lumière est configurée pour projeter la lumière d'excitation sur la scène avec un champ au moins aussi grand que celui du capteur 2. En particulier, la lumière d'excitation comprend une lumière dans une des bandes de fréquence parmi les bandes de fréquence correspondant à l'ultraviolet, au visible et à l'infrarouge.

La source complémentaire 1 de lumière est munie, plus particulièrement, d'un ou plusieurs éléments filtrants ou polarisants, configurés pour filtrer ou polariser la lumière d'excitation.

Une unité centrale 3, par exemple un ordinateur ou un processeur munie d'une mémoire comprenant les instructions appropriées, est configurée pour piloter la mise en œuvre des différentes étapes du procédé 100 selon l'invention.

Le procédé 100 selon l'invention vise à exploiter la différence entre une première image acquise sans excitation de la scène, et une deuxième image acquise avec excitation de la scène, pour extraire du fond lumineux généré par l'éclairage ambiant, avant de visualiser dans son contexte, le signal utile correspondant au signal faible émis par les composantes excitées de la scène 4.

Le procédé 100 selon l'invention permet ainsi de travailler sous éclairage ambiant et d'en extraire le signal faible.

Pour obtenir le résultat recherché par différence d'images, il est essentiel de pouvoir compenser un éventuel déplacement relatif de la scène 4 par rapport au capteur 2, entre l'acquisition de la première image et l'acquisition de la deuxième image, en calculant 104 une deuxième image recalée, avant de calculer 105 une image différentielle égale à une différence entre la première image et la deuxième image recalée.

Selon ces dispositions, l'impact, sur le signal utile de l'image différentielle, d'un bouger entre l'acquisition de la première image et l'acquisition de la deuxième image sera limité.

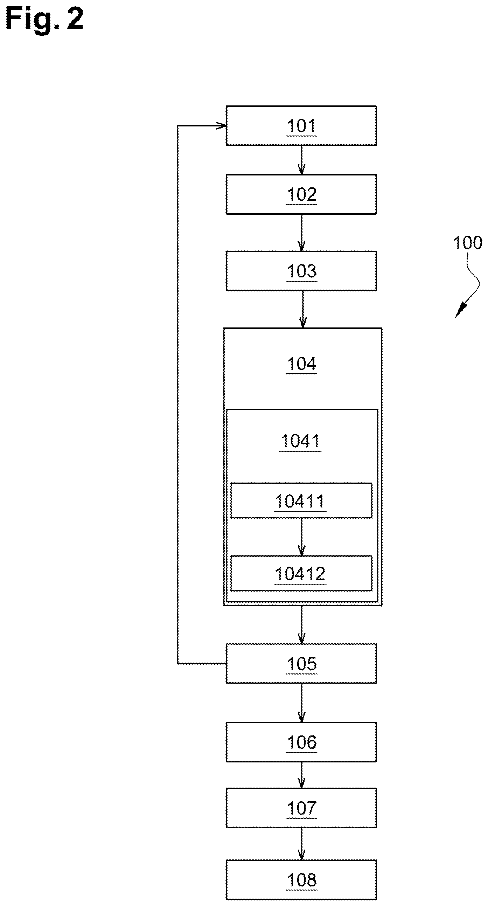

Ainsi, en référence à la figure 2, le procédé 100 selon un premier mode de réalisation de l'invention comprend les étapes suivantes :
- acquisition 101 par le capteur 2 d'une première image de la scène 4, la première image étant formée par une lumière ambiante réfléchie ou diffusée par la scène;
- excitation 102 de la scène par une source d'excitation 1, l'excitation 102 déclenchant une émission lumineuse d'au moins une partie de la scène, pendant une période de temps d'émission;
- acquisition 103 par le capteur 2 d'une deuxième image de la scène, l'acquisition 103 de la deuxième image étant synchronisée avec l'excitation 102 de la scène de sorte que l'acquisition 103 de la deuxième image soit réalisée pendant une partie de la période de temps d'émission, la deuxième image étant formée par l'émission lumineuse de l'au moins une partie de la scène ajoutée à la lumière ambiante réfléchie ou diffusée par la scène;

- calcul 104 d'une deuxième image recalée par rapport à la première image pour compenser un déplacement relatif de la scène par rapport au capteur 2 entre l'acquisition de la première image et l'acquisition de la deuxième image,
- calcul d'une image différentielle 105, l'image différentielle étant une différence entre la première image, et la deuxième image recalée.

Selon un mode de mise en œuvre particulier, la source d'excitation est une source complémentaire de lumière, ou une source d'excitation sonore, ou une source d'excitation électrique. Ainsi, l'homme du métier comprendra que l'on puisse utiliser une excitation sonore pour modifier la fluorescence d'au moins une partie de la scène, par exemple pour permettre la localisation de microstructures, ou de fissures. De même, l'homme du métier comprendra que l'on puisse utiliser une excitation électrique pour générer un champ magnétique ou électrique de manière à modifier la fluorescence d'au moins une partie de la scène, par exemple pour permettre de localiser un circuit de courant ou de potentiel électrique.

Plusieurs premières images sont acquises successivement, et plusieurs deuxièmes images sont acquises successivement au cours de plusieurs périodes d'excitations, avec un même type d'excitation, par exemple autour d'une longueur d'onde optique de 270nm, ou autour de 365 nm, ou encore autour d'une longueur d'onde d'une des bandes infra-rouge, etc...; Plus particulièrement encore, au cours desdites une ou plusieurs périodes d'excitations, différents types d'excitation sont utilisés, pour produire autant d'images acquises successivement. Chacune des images de la pluralité de premières images acquises successivement sont ensuite recalées entre elles avec le calcul d'autant de premières images recalées que de premières images acquises. Une première image intégrée, qui est une moyenne des premières images recalées, est calculée. De même, chacune des images de la pluralité de deuxièmes images acquises successivement sont ensuite recalées entre elles avec le calcul d'autant de deuxièmes images recalées que de deuxièmes images acquises. Une deuxième image intégrée, qui est une moyenne des deuxièmes images recalées, est calculée. L'étape de calcul 104 d'une deuxième image recalée par rapport à la première image est alors appliquée à respectivement la deuxième image intégrée et à la première image intégrée, pour calculer une deuxième image intégrée recalée par rapport à la première image intégrée. Enfin l'étape de calcul 105 de l'image différentielle est appliquée à la première image intégrée et à la deuxième image intégrée recalée, pour calculer l'image différentielle égale à la différence entre la première image intégrée et la deuxième image intégrée recalée. Le nombre de premières images acquises peut par exemple être différent du ou égale au nombre de deuxièmes images acquises ; les premières images de la pluralité de premières images peuvent être acquises successivement d'abord, avant l'acquisition des deuxièmes images de la pluralité de deuxièmes images ; mais optionnellement, il est également possible que chacune ou certaines des acquisitions de deuxième image soient intercalées entre deux acquisition de premières images.

Ainsi, l'ordre des acquisitions respectivement des premières et deuxièmes n'a pas d'importance particulière pour le bon fonctionnement de l'invention. En revanche l'intégration après le recalage des images successivement acquises, qu'il s'agisse de premières images, ou de deuxièmes images, ou encore d'images différentielles comme cela sera décrit ci-après, permet d'atténuer le bruit.

La durée entre la première image et la deuxième image, ou entre les acquisitions successives d'images synchronisées avec des excitations successives de la scène, est par exemple inférieure à 30 ms, de manière à limiter au maximum le bouger entre de deux acquisitions successives, tout en assurant un temps de pause suffisant pour l'acquisition des images compte tenu de la sensibilité du capteur 2.

Selon un mode de réalisation, que nous appellerons mode video, les étapes 101, 102, 103, 104, 105 du procédé 100 sont répétées plusieurs fois de suite de manière à obtenir une pluralité d'images différentielles ; une image différentielle intégrée, par exemple égale à une moyenne des images différentielles de la pluralité d'images différentielles est ensuite calculée. La période de temps entre deux itérations successives des étapes d'acquisition est inférieure à 100 ms, par exemple.

Plus particulièrement, l'intégration respectivement d'au moins deux images différentielles, ou d'au moins deux premières images, ou d'au moins deux deuxièmes images, comprend le calcul d'une somme ou d'une moyenne respectivement des au moins deux images différentielles, ou des aux moins deux premières images, ou des au moins deux deuxièmes images. Selon ces dispositions, le bruit est réduit, d'autant plus que le nombre d'images intégrées est important.

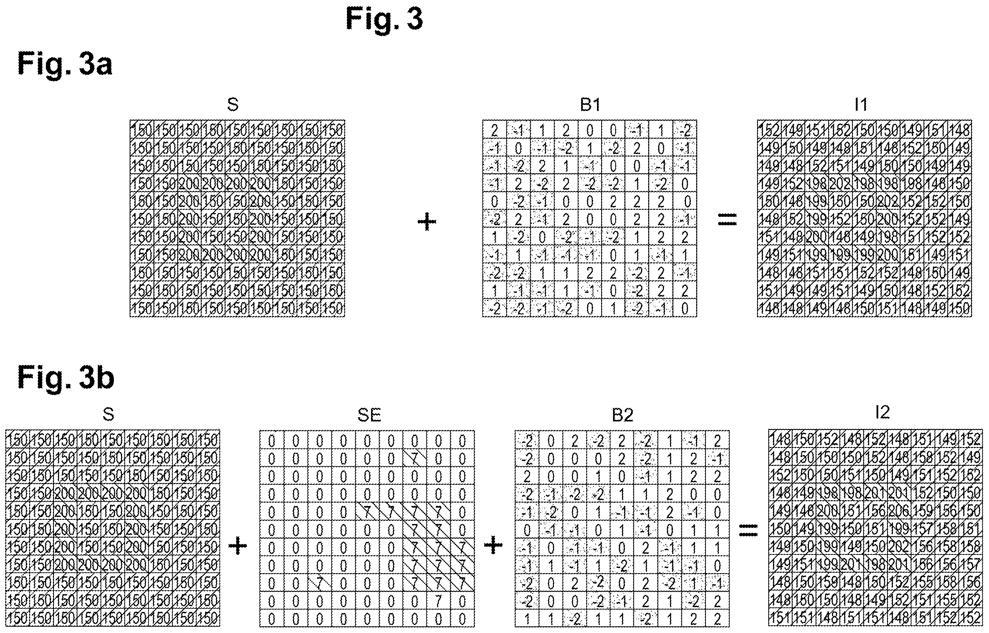

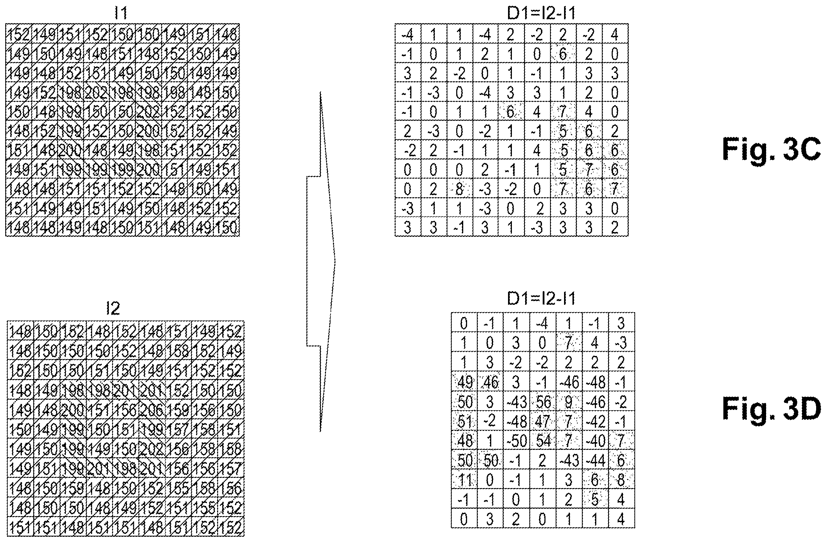

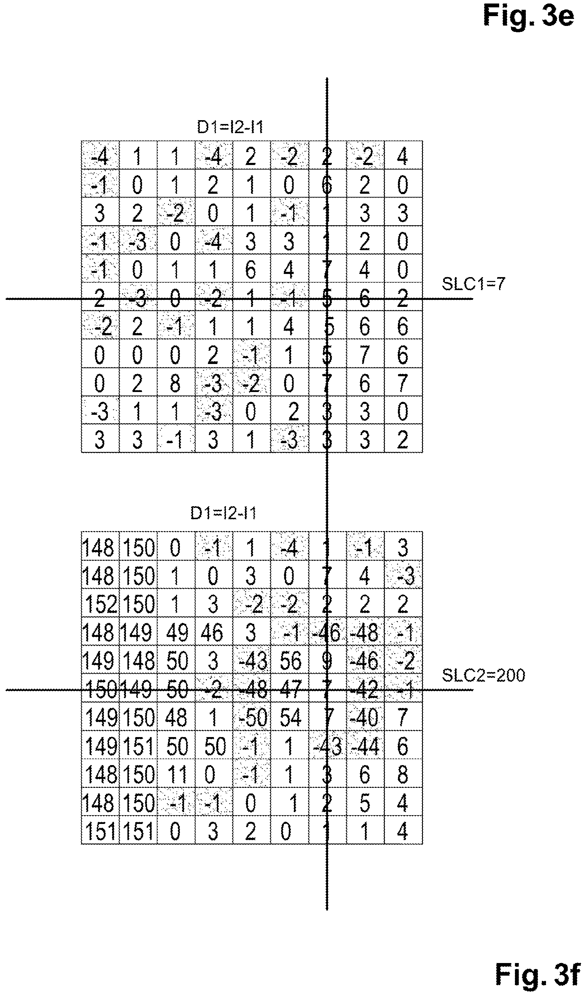

Selon un mode de mise en œuvre, illustré sur la figure 3, le capteur 2 comprend une matrice de détecteur, et chaque image acquise est une matrice de pixels, les dimensions de la matrice de pixel de chaque image acquise étant toujours les mêmes et égales aux dimensions de la matrice de détecteurs; chaque pixel d'une première image I1, i.e. d'une première matrice de pixels, correspond à l'image d'une portion de la scène autour d'un point de la scène 4, que nous désignerons dans la suite comme l'image du point de la scène 4. La valeur du pixel image d'un point de la scène 4 est une somme d'une valeur représentative du flux optique reçu par le détecteur correspondant en provenance dudit point de la scène 4 et d'une valeur correspondant à un bruit de détection propre au détecteur. Ainsi, comme cela est illustré sur la figure 3a, la première matrice de pixels I1 est la somme d'une matrice S des valeurs représentatives du flux optique reçu par chaque détecteur en provenance des points de la scène 4, et d'une matrice B1 des valeurs du bruit des détecteurs au moment de l'acquisition de la première image.

S'il n'y a pas de bouger, i.e. pas de déplacement de la scène 4 relativement au capteur 2 entre l'acquisition de la première image I1 et l'acquisition de la deuxième image I2, comme cela est illustré sur la figure 3b, la deuxième image I2 est la somme de la première matrice S, en considérant que l'éclairage ambiant est identique à celui mis en œuvre pour l'acquisition de la première image, et d'une deuxième matrice SE des valeurs représentatives du flux optique reçu par chaque détecteur en provenance des points de la scène 4 après excitation de celle-ci par la source d'excitation, et d'une troisième matrice B2 des valeurs du bruit des détecteurs au moment de l'acquisition de la deuxième image.

Comme cela est illustré sur la figure 3d, un déplacement du capteur 2 par rapport à la scène 4 entre l'acquisition de la première image I1 et l'acquisition de la deuxième image I2 créée un décalage, par exemple d'un pixel vers la droite le long d'une ligne, entre la position dans la première matrice de pixel de l'image du point de la scène 4 et la position dudit point dans la deuxième matrice de pixel de la deuxième image. Ainsi, si la valeur du pixel correspondant audit point est fortement contrastée par rapport à la valeur des points voisins dudit point dans la première matrice de pixel, une différence D2=I2-I1 entre la première matrice de pixels I1 et la deuxième matrice de pixel I2 fera apparaître au point considéré une valeur importante correspondant à la différence entre la valeur du pixel en ce point dans la première matrice de pixel et la valeur du pixel voisin dans la deuxième matrice de pixels, ledit pixel voisin étant décalé dudit pixel selon un décalage correspondant au déplacement du capteur 2 par rapport à la scène 4 intervenu entre l'acquisition de la première image I1 et l'acquisition de la deuxième image I2.

Lorsqu'il n'y a pas de déplacement, comme cela est illustré sur la figure 3c, la différence D1=I2-I1 ne fait apparaître que le bruit ou le signal utile, i.e. celui résultant de l'excitation de la scène par la source d'excitation 1.

En revanche, lorsqu'il y a un déplacement, la différence D2=I2-I1 fait apparaître des valeurs négatives dont la valeur absolue est très supérieure au bruit, et/ou au signal utile, au niveau des zones contrastées de la première image I1, correspondant typiquement aux contours marqués de certains objets présents dans la scène 4.

Ainsi, par exemple, on notera qu'une somme SLC2 des valeurs négatives le long d'une ligne et d'une colonne de la matrice différence D1, D2 aura une valeur absolue beaucoup plus importante, par exemple 200, pour la matrice différence D2=I2-I1 obtenue à la suite d'un décalage créée par un déplacement relatif entre l'acquisition de la première image I1 et l'acquisition de la deuxième image I2, alors que la valeur absolue de la somme SLC1 sera minimum, par exemple égale à 7, pour la matrice différence D1=I2-I1 obtenue lorsqu'il le déplacement relatif est nul entre l'acquisition de la première image I1 et l'acquisition de la deuxième image I2.

L'objectif de l'étape de recalage est de trouver un décalage de recalage qui, lorsqu'il est appliqué à la deuxième matrice de pixel, à la suite du premier décalage, permettra de retrouver un décalage nul entre les deux matrices. Selon un mode de mise en œuvre, on appliquera tous les décalages de recalage possible à la deuxième matrice de pixels I2, et de calculer, pour chaque décalage de recalage appliqué une somme SLC2 des valeurs négatives le long d'une ligne et d'une colonne de la matrice différence D2 ; le décalage de recalage recherché est alors déterminé en sélectionnant celui pour lequel la valeur absolue de la somme SLC2 est minimum.

Le choix de la somme SLC2 des valeurs négatives le long d'une ligne et d'une colonne de la matrice différence D2 n'est qu'un exemple. L'homme du métier comprendra que la somme SLC2 des valeurs négatives peut être calculée sur un autre sous-ensemble de la matrice différence D2.

L'étape de calcul 104 d'une deuxième image recalée par rapport à la première image pour compenser un déplacement relatif de la scène par rapport au capteur 2 entre l'acquisition de la première image et l'acquisition de la deuxième image, consiste alors à appliquer à la deuxième image I2 le décalage de recalage, après avoir déterminé comme indiqué ci-avant ledit décalage de recalage.

Autrement dit, selon un mode de mise œuvre illustré sur les figures 2 et 3, la détermination du décalage pour l'étape de calcul 104 d'une deuxième image recalée comprenant les sous-étapes suivantes :
- calcul 10411, pour une pluralité de pixels de la première matrice, d'une valeur absolue d'une somme SLC2 d'une différence entre la valeur du pixel de la première matrice et la valeur du pixel correspondant de la deuxième image, pour au moins deux décalages;
- détermination 10412 que le décalage est, parmi les au moins deux décalages, celui pour lequel la somme calculée répond à un critère prédéterminé, par exemple un critère de minimisation de la somme calculée, i.e. le décalage déterminé est celui pour lequel la somme calculée est minimum parmi les au moins deux décalages.

Selon ces dispositions, l'étape de recalage est particulièrement adaptée à la spécificité de l'imagerie différentielle, pour améliorer les performances et la vitesse du recalage.

Une autre manière particulière d'optimiser la performance globale du procédé 100 selon l'invention, lorsque le capteur 2 comprend une matrice de détecteurs, et une matrice de filtres colorés superposée à la matrice de détecteurs, par exemple dans le cas d'un capteur 2 d'images en couleur, consiste à configurer le capteur 2 pour que la première image et la deuxième image soient brutes, autrement dit non dématricées, et dans lequel la première image et la deuxième image ne sont pas dématricées avant l'étape de calcul de l'image différentielle.

Ainsi, la quantité de données à traiter dans chaque image est réduite d'environ deux tiers, par rapport au volume de données qui seraient à traiter si le ou les traitements était réalisés sur des images dématricées.

Selon un mode de mise en œuvre plus particulier du procédé 100 selon l'invention, le procédé 100 comprend en outre une étape de débruitage 106 appliquée à l'image différentielle pour obtenir une image différentielle débruitée.

Selon un mode de mise en œuvre, l'étape de débruitage comprend une sous-étape, appliquée aux pixels de l'image différentielle, de détermination qu'un pixel est bon ou mauvais ; un pixel est déterminé mauvais sur la base d'une comparaison de la valeur dudit pixel à la valeur de pixels voisins dudit pixel dans la matrice ; a contrario, un pixel est déterminé bon s'il n'est pas déterminé mauvais ; lorsque ledit pixel est déterminé mauvais, la valeur dudit pixel est remplacée par une valeur nulle ou par une valeur fonction de la valeur des pixels voisins, déterminés bon, dudit pixel.

En particulier, la comparaison de la valeur du pixel à la valeur de pixels voisins consiste par exemple à calculer un score de ressemblance de la valeur du pixel à la valeur de ses pixels voisins, et le pixel est déterminé mauvais en fonction d'un critère appliqué au score de ressemblance calculé. Par exemple, un pixel présentant une faible ressemblance en valeur à ses voisins est déterminé mauvais ; de même un pixel présentant une forte ressemblance avec un nombre trop limité de voisins est déterminé mauvais.

Selon ces dispositions, le signal utile étant faible et le bruit étant élevé en comparaison dudit signal utile, les valeurs bruitées ne seront pas moyennées, donc pas étalées par l'étape de débruitage.

Selon un mode de mise en œuvre, l'étape de dématriceage n'est pas réalisée avant l'étape de débruitage, de manière à réduire le volume des données à traiter par l'étape de débruitage.

Selon un mode de mise en œuvre plus particulier du procédé 100 selon l'invention, le procédé 100 comprend en outre une étape de compression 107 appliquée à l'image différentielle débruitée, pour obtenir une image différentielle débruitée comprimée dans laquelle chaque pixel de la matrice de pixels de l'image différentielle débruitée comprimée est codée sur un nombre de bits inférieur ou égal à un nombre de bits déterminé, de préférence inférieur ou égal à 8 bits. Selon un mode de mise en œuvre, une étape de dématriceage n'est pas réalisée avant l'étape de compression, de manière à réduire le volume des données à traiter.

Selon un mode de mise en œuvre plus particulier du procédé 100 selon l'invention, le procédé 100 comprend en outre une étape d'affichage 108 de l'image différentielle débruitée comprimée. En particulier, l'affichage de l'image différentielle débruitée comprimée comprend l'utilisation d'un code couleur pour améliorer la visibilité des zones comprenant un signal utile, le signal utile étant déterminé après un tri des pixels selon leur caractéristique d'intensité et de couleur, par exemple de manière à sélectionner les pixels fluorescents ou phosphorescents. Plus particulièrement, l'image différentielle débruitée comprimée est affichée en superposition à une image contextuelle, l'image contextuelle résultant d'un traitement de la première image ou de la deuxième image, pour faire apparaître une information sur l'entourage des zones comprenant un signal utile, par exemple de fluorescence ou phosphorescence.

Selon un mode de mise en œuvre du procédé 100 selon l'invention, le procédé comprend en outre une étape d'éclairage de la scène 4 ou d'un environnement de la scène 4, par une source d'éclairage s'ajoutant à la lumière ambiante, l'étape d'éclairage étant synchronisée de sorte que ledit éclairage soit éteint pendant l'acquisition 101 par le capteur 2 d'une première image, et pendant l'excitation 102 de la scène par la source d'excitation 1, et pendant l'acquisition 103 d'une deuxième image. Selon ces dispositions, l'éclairage de la scène permet à l'opérateur du procédé de travailler dans des conditions de luminosité satisfaisantes sans ajouter de bruit ambiant pendant les étapes d'acquisition des premières et deuxièmes images.

Selon un aspect de l'invention, elle concerne également un programme d'ordinateur, comprenant un ensemble d'instructions configurées pour implémenter le procédé selon l'un des modes de réalisation décrit ci-avant, lorsque lesdites instructions sont exécutées par l'unité centrale 3.

Selon un autre aspect de l'invention, elle concerne également un support lisible par un ordinateur, comprenant un ensemble d'instructions configurées pour implémenter le procédé selon l'un des modes de réalisation décrit ci-avant, lorsque lesdites instructions sont exécutées par l'unité centrale 3.

## Revendications

1. Procédé (100) d'acquisition et d'analyse d'une scène (4) par différence d'images acquises avec un capteur (2) d'images, le procédé (100) comprenant les étapes suivantes:
- acquisition par le capteur (2) d'une pluralité de premières images (101) de la scène (4), chacune des premières images étant formées par une lumière ambiante réfléchie ou diffusée par la scène;
- excitation (102) de la scène par une source d'excitation (1), l'excitation (102) déclenchant une émission lumineuse d'au moins une partie de la scène, pendant une période de temps d'émission;
- acquisition (103) par le capteur (2) d'une pluralité de deuxièmes images de la scène, l'acquisition de chaque deuxième image (103) étant synchronisée avec l'excitation (102) de la scène de sorte que l'acquisition de la deuxième image (103) soit réalisée pendant une partie de la période de temps d'émission, ladite deuxième image étant formée par l'émission lumineuse de l'au moins une partie de la scène ajoutée à la lumière ambiante réfléchie ou diffusée par la scène;
- premier recalage des premières images entre elles, l'étape de premier recalage étant suivie d'une étape d'intégration des premières images recalées entre elles, de manière à produire une première image intégrée, la première image intégrée étant une moyenne des premières images recalées entre elles,
- deuxième recalage des deuxièmes images entre elles, l'étape de deuxième recalage étant suivie d'une étape d'intégration des deuxièmes images recalées entre elles, de manière à produire une deuxième image intégrée, la deuxième image intégrée étant une moyenne des deuxièmes images recalées entre elles,
- calcul (104) d' une deuxième image intégrée recalée par rapport à la première image intégrée, puis d'une image différentielle égale à une différence entre la première image intégrée, et la deuxième image intégrée recalée.

2. Procédé (100) selon la revendication 1, dans lequel au moins une itération des étapes du procédé (100) est réalisée de manière à obtenir au moins une autre image différentielle et dans lequel l'au moins une autre image différentielle est recalée par rapport à l'image différentielle avant de calculer une image différentielle intégrée en fonction de l'image différentielle et de l'au moins une autre image différentielle recalée, puis de remplacer l'image différentielle par l'image différentielle intégrée.

3. Procédé (100) selon l'une des revendications précédentes, dans lequel la première image est une première matrice de pixels, la deuxième image est une deuxième matrice de pixels, et le calcul d'une deuxième image recalée (104) comprenant la détermination d'un décalage (1041) entre la première matrice et la deuxième matrice, ledit décalage faisant correspondre à un pixel de la première matrice, un pixel correspondant de la deuxième matrice, la détermination du décalage comprenant les sous-étapes suivantes :
- calcul (10411) d'une somme, pour une pluralité de pixels de la première matrice, d'une valeur absolue d'une différence entre la valeur du pixel de la première matrice et la valeur du pixel correspondant de la deuxième image, pour au moins deux décalages;
- détermination (10412) que le décalage est, parmi les au moins deux décalages, celui pour lequel la somme calculée répond à un critère prédéterminé.

4. Procédé (100) selon l'une des revendications précédentes, dans lequel le capteur (2) comprend une matrice de détecteurs, et une matrice de filtres colorés superposée à la matrice de détecteurs, le capteur (2) étant configuré pour que la première image et la deuxième image soient brutes, autrement dit non dématricées, et dans lequel la première image et la deuxième image ne sont pas dématricées avant l'étape de calcul de l'image différentielle.

5. Procédé (100) selon l'une des revendications précédentes, comprenant en outre une étape de débruitage (106) appliquée à l'image différentielle pour obtenir une image différentielle débruitée.

6. Procédé (100) selon la revendication 5 comprenant en outre une étape de compression (107) appliquée à l'image différentielle débruitée, pour obtenir une image différentielle débruitée comprimée dans laquelle chaque pixel de la matrice de pixels de l'image différentielle débruitée comprimée est codée sur un nombre de bits inférieur ou égal à un nombre de bits déterminé, de préférence inférieur ou égal à 8 bits.

7. Procédé (100) selon la revendication 6, comprenant en outre une étape d'affichage (108) de l'image différentielle débruitée comprimée.

8. Procédé (100) selon l'une des revendications précédentes, comprenant en outre une étape d'éclairage de la scène (4) ou d'un environnement de la scène par une source d'éclairage s'ajoutant à la lumière ambiante, l'étape d'éclairage étant synchronisée de sorte que ledit éclairage soit éteint pendant que les étapes d'acquisition par le capteur (2) d'une première image (101) de la scène (4), d'excitation (102) de la scène par la source complémentaire (1) de lumière, et d'acquisition par le capteur (2) d'une deuxième image (103) de la scène (4), sont mises en œuvres.

9. Programme d'ordinateur, comprenant un ensemble d'instructions configurées pour implémenter le procédé selon l'une des revendications 1 à 8, lorsque lesdites instructions sont exécutées par un ordinateur.

10. Support lisible par un ordinateur, comprenant un ensemble d'instructions configurées pour implémenter le procédé selon l'une des revendications 1 à 8, lorsque lesdites instructions sont exécutées par un ordinateur

## Patentansprüche

1. Verfahren (100) zum Erfassen und Analysieren einer Szene (4) durch Differenz der mit einem Bildsensor (2) erfassten Bilder, wobei das Verfahren (100) die folgenden Schritte umfasst:
- Erfassen einer Vielzahl von ersten Bildern (101) der Szene (4) durch den Sensor (2), wobei jedes der ersten Bilder durch Umgebungslicht gebildet wird, das von der Szene reflektiert oder gestreut wird;
- Anregen (102) der Szene durch eine Anregequelle (1), wobei die Anregung (102) eine Lichtemission von mindestens einem Teil der Szene während eines Sendezeitraums auslöst;
- Erfassen (103), durch den Sensor (2), einer Vielzahl von zweiten Bildern der Szene, wobei die Erfassung jedes zweiten Bildes (103) mit der Anregung (102) der Szene synchronisiert ist, so dass das Erfassen des zweiten Bildes (103) während eines Teils des Sendezeitraums erfolgt, wobei das zweite Bild durch die Lichtemission des mindestens einen Teils der Szene gebildet wird, der dem von der Szene reflektierten oder gestreuten Umgebungslicht hinzugefügt wird;
- erstes Neukalibrieren der ersten Bilder untereinander, wobei auf den ersten Neukalibrierschritt ein Schritt der Integration der untereinander neukalibrierten ersten Bilder folgt, so dass ein erstes integriertes Bild erzeugt wird, wobei das erste integrierte Bild ein Mittelwert der untereinander neukalibrierten ersten Bilder ist,
- zweites Neukalibrieren der zweiten Bilder untereinander, wobei auf den zweiten Neukalibrierschritt ein Schritt der Integration der untereinander neukalibrierten zweiten Bilder folgt, so dass ein zweites integriertes Bild erzeugt wird, wobei das zweite integrierte Bild ein Mittelwert der untereinander neukalibrierten zweiten Bilder ist,
- Berechnen (104) eines zweiten integrierten Bildes, das in Bezug auf das erste integrierte Bild neukalibriert wird, und anschließend eines Differenzbildes, das einer Differenz zwischen dem ersten integrierten Bild und dem zweiten integrierten Bild entspricht, das neukalibriert wird.

2. Verfahren (100) nach Anspruch 1, wobei wenigstens eine Iteration der Verfahrensschritte (100) so durchgeführt wird, dass mindestens ein anderes Differenzbild erhalten wird, und wobei das mindestens eine andere Differenzbild gegenüber dem Differenzbild neukalibriert wird, bevor ein integriertes Differenzbild in Abhängigkeit vom Differenzbild und dem mindestens anderen neukalibrierten Differenzbild berechnet wird und dann das Differenzbild durch das integrierte Differenzbild ersetzt wird.

3. Verfahren (100) nach einem der vorhergehenden Ansprüche, wobei das erste Bild eine erste Pixelmatrix ist, das zweite Bild eine zweite Pixelmatrix ist, und das Berechnen eines zweiten neukalibrierten Bildes (104) das Bestimmen eines Versatzes (1041) zwischen der ersten Matrix und der zweiten Matrix umfasst, wobei der Versatz einem Pixel der ersten Matrix mit einem entsprechenden Pixel der zweiten Matrix in Übereinstimmung bringt, wobei das Bestimmen des Versatzes die folgenden Unterschritte umfasst:
- Berechnen (10411) einer Summe für eine Vielzahl von Pixeln der ersten Matrix, aus einem absoluten Wert einer Differenz zwischen dem Pixelwert der ersten Matrix und dem entsprechenden Pixelwert des zweiten Bildes, für mindestens zwei Versätze;
- Bestimmen (10412), dass der Versatz unter den mindestens zwei Versätzen derjenige ist, für den die berechnete Summe ein vorbestimmtes Kriterium erfüllt.

4. Verfahren (100) nach einem der vorhergehenden Ansprüche, wobei der Sensor (2) eine Detektormatrix und eine der Detektormatrix überlagerte Farbfiltermatrix umfasst, wobei der Sensor (2) so konfiguriert ist, dass das erste Bild und das zweite Bild roh, d. h., nicht demosaiciert sind, und wobei das erste Bild und das zweite Bild vor dem Schritt des Berechnens des Differenzbildes nicht demosaiciert werden.

5. Verfahren (100) nach einem der vorhergehenden Ansprüche, ferner umfassend einen Rauschunterdrückungsschritt (106), der auf das Differenzbild angewendet wird, um ein rauschunterdrücktes Differenzbild zu erhalten.

6. Verfahren (100) nach Anspruch 5, das ferner einen Komprimierungsschritt (107) umfasst, der auf das rauschunterdrückte Differenzbild angewendet wird, um ein komprimiertes rauschunterdrücktes Differenzbild zu erhalten, wobei jedes Pixel der Pixelmatrix des komprimierten rauschunterdrückten Differenzbildes auf eine Anzahl von Bits kleiner oder gleich einer bestimmten Anzahl von Bits, vorzugsweise kleiner oder gleich 8 Bits, codiert ist.

7. Verfahren (100) nach Anspruch 6, ferner umfassend einen Schritt zur Anzeige (108) des komprimierten, rauschunterdrückten Differenzbildes.

8. Verfahren (100) nach einem der vorhergehenden Ansprüche, ferner umfassend einen Beleuchtungsschritt der Szene (4) oder einer Umgebung der Szene durch eine Lichtquelle, die dem Umgebungslicht hinzugefügt wird, wobei der Beleuchtungsschritt so synchronisiert ist, dass die Beleuchtung ausgeschaltet ist, während die Schritte des Erfassens eines ersten Bildes (101) der Szene (4) durch den Sensor (2), des Anregens (102) der Szene durch die ergänzende Lichtquelle (1) und des Erfassens eines zweiten Bildes (103) der Szene (4) durch den Sensor (2) durchgeführt werden.

9. Computerprogramm, umfassend eine Reihe von Anweisungen, die so konfiguriert sind, dass sie das Verfahren nach einem der Ansprüche 1 bis 8 implementieren, wenn die Anweisungen von einem Computer ausgeführt werden.

10. Computerlesbares Medium, umfassend eine Reihe von Anweisungen, die so konfiguriert sind, dass sie das Verfahren nach einem der Ansprüche 1 bis 8 implementieren, wenn die Anweisungen von einem Computer ausgeführt werden

## Claims

1. A method (100) for acquiring and analyzing a scene (4) by difference of images acquired with an image sensor (2), the method (100) comprising the following steps:
- acquisition by the sensor (2) of a plurality of first images (101) of the scene (4), each of the first images being formed by ambient light reflected or scattered by the scene;
- excitation (102) of the scene by an excitation source (1), the excitation (102) triggering light emission from at least one portion of the scene, during an emission time period;
- acquisition (103) by the sensor (2) of a plurality of second images of the scene, the acquisition of each second image (103) being synchronized with the excitation (102) of the scene so that the acquisition of the second image (103) is carried out during a portion of the emission time period, said second image being formed by the light emission from the at least one portion of the scene added to the ambient light reflected or scattered by the scene;
- first registration of the first images with each other, the first registration step being followed by a step of integrating the first images registered with each other, so as to produce a first integrated image, the first integrated image being an average of the first images registered with each other,
- second registration of the second images with each other, the second registration step being followed by a step of integrating the second images registered with each other, so as to produce a second integrated image, the second integrated image being an average of the second images registered with each other,
- calculation (104) of a second integrated image registered with respect to the first integrated image, then of a differential image equal to a difference between the first integrated image and the second registered integrated image.

2. The method (100) according to claim 1, wherein at least one iteration of the steps of the method (100) is carried out so as to obtain at least one other differential image, and wherein the at least one other differential image is registered with respect to the differential image before calculating an integrated differential image based on the differential image and the at least one other registered differential image, and then replacing the differential image with the integrated differential image.

3. The method (100) according to any of the preceding claims, wherein the first image is a first pixel array, the second image is a second pixel array, and the calculation of a second registered image (104) comprising the determination of an offset (1041) between the first array and the second array, said offset causing a pixel of the first array to correspond with a corresponding pixel of the second array, the determination of the offset comprising the following sub-steps:
- calculation (10411) of a sum, for a plurality of pixels of the first array, of an absolute value of a difference between the value of the pixel of the first array and the value of the corresponding pixel of the second image, for at least two offsets;
- determination (10412) that the offset is, among the at least two offsets, the one for which the calculated sum meets a predetermined criterion.

4. The method (100) according to any of the preceding claims, wherein the sensor (2) comprises a detector array and a color filter array superimposed on the detector array, the sensor (2) being configured so that the first image and the second image are raw, in other words non-demosaiced, and wherein the first image and the second image are not demosaiced before the step of calculating the differential image.

5. The method (100) according to any of the preceding claims, further comprising a denoising step (106) applied to the differential image to obtain a denoised differential image.

6. The method (100) according to claim 5, further comprising a compression step (107) applied to the denoised differential image, to obtain a compressed denoised differential image in which each pixel of the pixel array of the compressed denoised differential image is encoded on a number of bits less than or equal to a determined number of bits, preferably less than or equal to 8 bits.

7. The method (100) according to claim 6, further comprising a step of displaying (108) the compressed denoised differential image.

8. The method (100) according to any of the preceding claims, further comprising a step of illuminating the scene (4) or an environment of the scene by a light source in addition to the ambient light, the illumination step being synchronized so that said illumination is switched off while the steps of acquiring by the sensor (2) a first image (101) of the scene (4), of exciting (102) the scene by the additional light source (1), and of acquiring by the sensor (2) a second image (103) of the scene (4) are performed.

9. A computer program, comprising a set of instructions configured to implement the method according to any of claims 1 to 8, when said instructions are executed by a computer.

10. A computer-readable medium comprising a set of instructions configured to implement the method according to any of claims 1 to 8, when said instructions are executed by a computer
